# EUROPÄISCHE PATENTANMELDUNG

(11) **EP 2 347 890 A1**
(43) Veröffentlichungstag der Anmeldung: **27.07.2011**
(21) Anmeldenummer: 10167223.6
(22) Anmeldetag: 24.06.2010
(51) Int. Cl.: B29C 70/34, B29C 70/44, B29C 70/02

(54) **Verfahren zur Herstellung eines zumindest abschnittsweise als Hohlprofil ausgebildeten Rahmenbauteils eines Kraftfahrzeuges**

(71) Anmelder: ISE Automotive GmbH, 51702 Bergneustadt (DE)
(72) Erfinder: Hartebrodt, Raphael, 57489 Drolshagen (DE); Lang, Josef, 1131 Budapest (HU); Knözinger, Gerd, 53819 Seelscheid (DE); Nagy, Geza, 2013 Pomaz (HU)
(74) Vertreter: Wenzel & Kalkoff

(57) **Zusammenfassung**

Die Erfindung betrifft ein Verfahren zur Herstellung eines zumindest abschnittsweise als Hohlprofil ausgebildeten Rahmenbauteils eines Kraftfahrzeugs, mit einer strukturellen Verstärkung aus faserverstärktem Kunststoff. Ein Verfahren zur Herstellung eines Rahmenbauteils, sowie ein Rahmenbauteil, das neben einem geringen Gewicht eine hohe Steifigkeit aufweist umfasst die Schritte:
- Einbringen eines schlauchartigen Hohlkörpers aus Kunststoff in das Hohlprofil,
- Druckbeaufschlagung des verformbaren Hohlkörpers derart, dass dieser gegen eine Innenkontur des Hohlprofils gedrückt wird und
- Aushärtung des Hohlprofils.

## Beschreibung

Die Erfindung betrifft ein Verfahren zur Herstellung eines zumindest abschnittsweise als Hohlprofil ausgebildeten Rahmenbauteils eines Kraftfahrzeuges, mit einer strukturellen Verstärkung aus faserverstärktem Kunststoff sowie ein Rahmenbauteil eines Kraftfahrzeugs mit einem zumindest abschnittsweise als Hohlprofil ausgebildeten Bereich.

Rahmenbauteile der eingangs genannten Art sind in vielfältigen Ausgestaltungen aus dem Stand der Technik bekannt. Als Bestandteil von Fahrzeugkarosserien ermöglichen sie über ihre Ausgestaltung u. a. die Festlegung der Festigkeitseigenschaften sowie des Gewichts der aus Ihnen gebildeten Fahrzeuge.

Aufgrund der zunehmend steigenden fahrzeugherstellerseitigen Anforderungen an ein geringes Fahrzeuggewicht bei gleichzeitig erhöhter Steifigkeit der Karosserie besteht die Notwendigkeit, alternative Ausgestaltungen für derzeit bekannte Rahmenbauteile sowie deren Herstellung bereitzustellen. Die bereits bekannte Verwendung alternativer Materialien und Werkstoffe zur Herstellung der Rahmenbauteile, insbesondere die Verwendung von Faserverbundwerkstoffen weist den Nachteil auf, dass diese nur sehr aufwändig und damit kostenintensiv verarbeitbar sind.

Der Erfindung liegt die Aufgabe zugrunde, ein Verfahren zur Herstellung eines Rahmenbauteils, sowie ein Rahmenbauteil bereitzustellen, das neben einem geringen Gewicht eine hohe Steifigkeit aufweist. Die Erfindung löst die Aufgabe durch ein Verfahren gemäß Anspruch 1 sowie ein Rahmenbauteil gemäß Anspruch 7. Vorteilhafte Weiterbildungen der Erfindung sind in den abhängigen Ansprüchen angegeben.

Wesentlich für das erfindungsgemäße Verfahren zur Herstellung eines zumindest abschnittsweise als Hohlprofil ausgebildeten Rahmenbauteils eines Kraftfahrzeugs, mit einer strukturellen Verstärkung aus faserverstärktem Kunststoff ist, dass ein schlauchartiger, aus Kunststoff gebildeter Hohlkörper nach dessen Einbringung in das Hohlprofil derart mit Druck beaufschlagt wird, dass sich der Hohlkörper gegen die Innenkontur des Hohlprofils drückt und dass im Anschluss an die Formgebung der aus Kunststoff gebildete Hohlkörper ausgehärtet wird.

Durch das erfindungsgemäße Verfahren kann in einfacher Weise ein Rahmenbauteil gebildet werden, dessen als Hohlprofil ausgebildete Abschnitte im Inneren durch einen faserverstärkten Kunststoff verstärkt sind. Die Verwendung des aus Kunststoff gebildeten schlauchartigen Hohlkörpers ermöglicht es dabei in besonders einfacher Weise, diesen flächig an der Innenseite der Innenkontur des Hohlprofils anzuordnen. Der schlauchartige Hohlkörper, welcher vorzugsweise einenends verschlossen ist, wird hierzu anderenends mit Druck beaufschlagt, wodurch sich dieser ausdehnt. Der Ausdehnungsprozess ist dabei durch die Innenkontur des Hohlprofils begrenzt, weshalb über diese eine zuverlässige Anlage des Hohlkörpers an dem Hohlprofil erreicht wird. Im Anschluss an die Anformung des Hohlkörpers an die Innenkontur erfolgt eine Aushärtung des Hohlkörpers, so dass ein Rahmenbauteil mit einer besonders hohen Steifigkeit bei gleichzeitig niedrigem Gewicht erreicht wird.

Das erfindungsgemäße Verfahren zeichnet sich dadurch aus, dass in besonders einfacher und kostengünstiger Weise, nämlich durch Druckbeaufschlagung des im Hohlprofil angeordneten Hohlkörpers, ein Rahmenbauteil geschaffen werden kann, welches aufgrund einer Ausgestaltung des Hohlkörpers aus faserverstärktem Kunststoff in besonderer Weise den gestiegenen, an Rahmenbauteile von Kraftfahrzeugen gestellten Anforderungen gerecht wird.

Die Einbringung des Hohlkörpers in das Hohlprofil des Rahmenbauteils kann grundsätzlich, sofern das Hohlprofil von außen zugänglich ist, auch nach dem Abschluss der Fertigung des Hohlprofils vorgenommen werden. So ist es bspw. denkbar, den schlauchartigen Hohlkörper nach Beendigung der Herstellung des Hohlprofils in endseitig in diesem vorhandene Öffnungen einzuschieben. Nach einer vorteilhaften Weiterbildung der Erfindung ist das Hohlprofil jedoch aus mindestens zwei Schalenteilen gebildet und der Hohlkörper wird vor der Montage des Hohlprofils durch Zusammenbau der Schalenteile in eines dieser Schalenteile eingelegt. Diese Ausgestaltung der Erfindung zeichnet sich dabei dadurch aus, dass in besonders zuverlässiger Weise gewährleistet werden kann, dass sich der schlauchartige Hohlkörper über die gesamte Länge des Hohlprofils erstreckt, so dass nach dessen Druckbeaufschlagung die Innenkontur des Hohlprofils im Wesentlichen vollständig in Kontakt mit dem Hohlkörper steht. Insbesondere bei komplizierten Formen aufweisenden Rahmenbauteilen gewährleistet diese Ausgestaltung der Erfindung die fehlerfreie Herstellung eines entsprechenden Rahmenbauteils.

Die Ausgestaltung des Hohlkörpers, der zur Herstellung des Hohlkörpers verwendete Kunststoff sowie die in den Kunststoff eingebetteten Fasern können bspw. in Abhängigkeit von den geforderten Anforderungen frei gewählt werden. So können bspw. metallische und/oder Kohlefasern gerichtet oder ungerichtet in den Kunststoff eingebettet sein. Für den Hohlkörper können in Querrichtung dehnbare Kunststoffe verwendet werden und/oder der Hohlkörper weist eine Flexibilität auf und wird im gefalteten Zustand in das Hohlprofil eingebracht, so dass sich durch die Druckbeaufschlagung der Hohlkörper entfaltet. Nach einer besonders vorteilhaften Ausgestaltung der Erfindung wird der Hohlkörper vor der Druckbeaufschlagung aufgeheizt und ist im abgekühlten Zustand ausgehärtet. Gemäß dieser Ausgestaltung der Erfindung ist der Hohlkörper derart ausgebildet, dass durch den Aufheizvorgang dieser durch die Druckbeaufschlagung verformbar ist, so dass dann der Hohlkörper zuverlässig an der Innenkontur des Hohlprofils zur Anlage gelangt. Nach Abschluss der Druckbeaufschlagung und der spätestens dann erfolgenden Beendigung des Aufheizvorgangs kühlt der Hohlkörper ab, wobei dieser dann aushärtet, so dass ein homogener Verbund zwischen dem Hohlkörper und dem Hohlprofil mit einer ausreichenden Stabilität hergestellt wird.

Nach einer alternativen Ausgestaltung ist vorgesehen, dass der Hohlkörper nach der Druckbeaufschlagung erwärmt wird, wobei der Hohlkörper derart ausgebildet ist, dass dieser unter Wärmezufuhr aushärtet. Gemäß dieser Ausgestaltung der Erfindung kann eine Anformung des Hohlkörpers an die Innenkontur des Hohlprofils bereits vor einer erfolgenden Wärmezufuhr erfolgen. Diese erfolgt erst nach Abschluss der Verformung dazu, um den Hohlkörper in der Anlage an dem Hohlprofil auszuhärten und somit daran zu fixieren. Auch diese Ausgestaltung der Erfindung gewährleistet in besonderem Maße einen zuverlässigen Verbund zwischen dem Hohlprofil und dem Hohlkörper.

Die Aufheizung kann in diesem sowie gemäß der zuvor geschilderten Weiterbildung der Erfindung durch eine separate Vorrichtung bzw. in einem eigenen Verfahrenschritt erfolgen. Vorteilhafterweise ist der Hohlkörper jedoch derart ausgelegt, dass durch die Wärmezufuhr üblicherweise erfolgender Bearbeitungsschritte, wie z. B. einer KTL-Beschichtung im Rahmen eine Oberflächenbehandlung, die für die Aushärtung bzw. Vorbereitung erforderliche Wärme eingebracht wird.

Grundsätzlich wird bereits durch das erfindungsgemäße Verfahren in zuverlässiger Weise eine homogene Anlage des Hohlkörpers am Hohlprofil erreicht. Nach einer besonders vorteilhaften Ausgestaltung der Erfindung wird jedoch in den Bereich zwischen der Innenkontur und dem Hohlkörper ein Haftvermittler, insbesondere ein wärmeaktiver Strukturklebeschaum eingebracht. Die Einbringung des Strukturklebeschaums kann dabei durch vorheriges Beschichten des Hohlprofils und/oder Hohlkörpers oder auch durch Einspritzen in den Zwischenraum erreicht werden. Der Haftvermittler, insbesondere der Strukturklebeschaum erhöht die Bindung zwischen dem Hohlprofil und dem Hohlkörper und verbessert somit in ergänzender Weise die Anbindung des Hohlkörpers an dem Hohlprofil. Im Falle der Verwendung eines Strukturklebeschaums wird durch diesen neben einer erhöhten Haftung des Hohlprofils an dem Hohlkörper darüber hinaus eine zusätzliche Struktursteifigkeit des Rahmenbauteils erreicht.

Die Druckbeaufschlagung des Hohlkörpers kann grundsätzlich in beliebiger Weise erfolgen, wobei bevorzugt Druckluft verwendet wird, nachdem sich diese besonders einfach und kostengünstig bereit stellen lässt. Alternativ besteht die Möglichkeit, Flüssigkeiten oder fließfähige Festkörper in das Innere des Hohlkörpers einzupressen, welche daraufhin den Hohlkörper gegen die Innenkontur des Hohlprofils pressen. Nach einer weiteren Ausgestaltung der Erfindung wird jedoch ein zuvor im Inneren des Hohlkörpers angeordneter, wärmeaktivierbarer Hartschaum zur Druckbeaufschlagung erwärmt. Der wärmeaktivierbare Hartschaum besitzt dabei die Eigenschaften, dass er sich unter Wärmeeinfluss ausdehnt. Durch die Ausdehnung des Hartschaums wird der Hohlkörper in Richtung der Innenkontur verformt bis dieser an der Innenkontur zur Anlage kommt. Der wärmeaktivierbare Hartschaum gewährleistet somit eine besonders gute Anlage des Hohlkörpers an der Innenkontur und steigert darüber hinaus aufgrund seiner Eigensteifigkeit die Steifigkeit des Rahmenbauteils.

Das erfindungsgemäße Rahmenbauteil zeichnet sich dadurch aus, dass ein aus faserverstärktem Kunststoff gebildeter, schlauchartiger Hohlkörper an eine Innenkontur des Hohlprofils angeformt ist. Ein entsprechend ausgebildetes Rahmenbauteil weist den Vorteil auf, dass die durch den Hohlkörper erreichte Strukturverstärkung im Inneren des Hohlprofils angeordnet ist, so dass Oberflächenbearbeitungen der Rahmenbauteile, wie z. B. Beschichtungen, in gewohnter Weise erfolgen können. Der an der Innenkontur des Hohlprofils anliegende Hohlkörper steigert in Abhängigkeit von dem verwendeten faserverstärktem Kunststoff, d. h. sowohl in Abhängigkeit von dem Kunststoff sowie der darin eingebetteten Fasern die Steifigkeit des Rahmenbauteils. Das erfindungsgemäße Rahmenbauteil weist darüber hinaus den Vorteil auf, dass es sich in besonders einfacher Weise, nämlich in der zuvor geschilderten Weise, herstellen lässt. Nachdem darüber hinaus zwischen dem Hohlprofil und dem Hohlkörper keinerlei materialspezifischen Wechselwirkungen bestehen, können für beide Bauteile den jeweiligen Anforderungen entsprechende Materialien frei gewählt verwendet werden. So besteht die Möglichkeit, neben üblicherweise verwendeten Blechteilen, z. B. aus Stahl, Aluminium und/oder Legierungen hieraus, für das Hohlprofil auch alternative Werkstoffe, wie Faserverbundwerkstoffe oder dergl. zu verwenden. In gleicher Weise können für den Hohlkörper, sofern dieser die Möglichkeit einer Anformung an die Innenkontur bietet, beliebige Materialien verwendet werden.

Nach einer besonders vorteilhaften Ausgestaltung der Erfindung ist der Hohlkörper durch Druckbeaufschlagung an die Innenkontur angeformt. Gemäß dieser Weiterbildung ist der Hohlkörper innenseitig derart mit Druck beaufschlagt worden, dass er an der Innenkontur des Hohlprofils zur Anlage gekommen ist. Ein derartiges Rahmenbauteil weist den Vorteil auf, dass es eine besonders hohe Steifigkeit aufweist. Der Hohlkörper liegt dabei besonders vorteilhafterweise im ausgehärteten Zustand an der Innenkontur an, womit gewährleistet wird, dass es im Betrieb nicht zu einer Ablösung des Hohlkörpers von der Innenkontur kommt, welche mit einem Verlust der Steifigkeitseigenschaften einhergehen würde.

Nach einer besonders vorteilhaften Ausgestaltung der Erfindung ist ferner im Bereich der Innenkontur und dem Hohlkörper ein Haftvermittler, insbesondere ein wärmeaktiver Strukturklebeschaum angeordnet. Ein Haftvermittler erhöht die Bindung zwischen der Innenkontur und dem Hohlkörper in ergänzender Weise. Im Falle der Verwendung eines Strukturklebeschaums als Haftvermittler erhöht dieser zudem aufgrund der spezifischen Eigenschaften des Klebeschaums im ausgehärteten Zustand die Steifigkeitseigenschaften des Rahmenbauteils in ergänzender Weise.

Die Anformung des Hohlkörpers an der Innenkontur durch Druckbeaufschlagung des Inneren des Hohlkörpers kann grundsätzlich in beliebiger Weise erfolgen, wobei die Verwendung von Druckluft zur Verformung des Hohlkörpers eine besonders kostengünstige Herstellung des Rahmenbauteils ermöglicht. Nach einer vorteilhaften Ausgestaltung der Erfindung ist jedoch im Inneren des Hohlkörpers ein Hartschaum, insbesondere wärmeaktivierbarer Hartschaum angeordnet. Eine entsprechende Ausgestaltung der Erfindung gewährleistet durch die Expansion des wärmeaktivierbaren Hartschaums eine besonders zuverlässige Anlage der Hohlkörperoberfläche an der Innenkontur, wobei gleichzeitig der Hartschaum im ausgehärteten Zustand eine Abstützung des Hohlkörpers im Inneren bietet und aufgrund seiner ausgehärteten Struktur ergänzend zur Steifigkeit des Rahmenbauteils beiträgt. Insofern kann durch eine entsprechende Ausgestaltung die Steifigkeit des Rahmenbauteils in ergänzender Weise erhöht werden.

Nach einer weiteren Ausgestaltung der Erfindung ist der Hohlkörper derart ausgebildet, dass er im Inneren mit Druck beaufschlagt werden kann. Eine Druckbeaufschlagung durch ein gasförmiges, flüssiges oder festes Medium ermöglicht es, das Rahmenbauteil im Gefahrenfall, bspw. im Falle eines Crashs, in ergänzender Weise zu versteifen, so dass dieses einen höheren Widerstand gegen Verformung aufweist und damit in ergänzender Weise zum Schutz der Insassen beiträgt.

Nach einer besonders vorteilhaften Ausgestaltung der Erfindung ist dabei der Hohlkörper zum Anschluss an einen Gasgenerator ausgebildet. Diese Ausgestaltung der Erfindung ermöglicht es, bekannte Gasgeneratoren, wie sie bspw. bereits für Airbagsysteme verwendet werden, direkt an den Hohlkörper anzuschließen. Erkennt eine an sich bekannte Sensorik einen Gefahren-Fall, so wird der Gasgenerator unmittelbar ausgelöst und versteift aufgrund des damit einhergehenden Druckaufbaus im Inneren des Hohlkörpers das Rahmenbauteil in ergänzender Weise.

Für den Hohlkörper können grundsätzlich beliebige Kunststoffe verwendet werden. Nach einer besonders vorteilhaften Ausgestaltung der Erfindung ist der Hohlkörper jedoch aus einem faserverstärktem Thermo- oder Duroplast gebildet.

Ausführungsbeispiele der Erfindung werden nachstehend mit Bezug auf die Zeichnungen näher erläutert. In den Zeichnungen zeigen:
- Fig. 1: eine Skizze einer perspektivischen Ansicht eines Rahmenbauteils eines Kraftfahrzeuges mit darin eingebettetem, nicht expandiertem Hohlkörper;
- Fig. 2: eine perspektivische Ansicht des Rahmenbauteils von Fig. 1 mit expandiertem Hohlkörper und
- Fig. 3: eine Schnittansicht durch einen Abschnitt eines Rahmenbauteils mit darin expandiertem Hohlkörper.

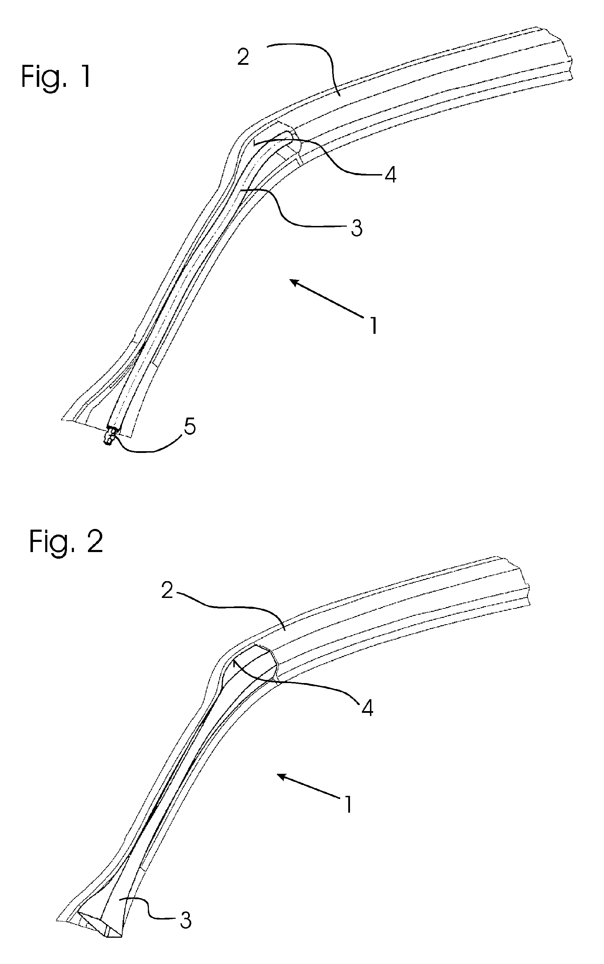

In Fig. 1 ist in einer perspektivischen Darstellung, teilweise freigestellt, ein Rahmenbauteil 1 dargestellt, wobei es sich dabei um einen Abschnitt einer A-Säule eines Kraftfahrzeugs handelt. Das Rahmenbauteil 1 weist ein kastenartiges Hohlprofil 2 auf, in dessem Inneren ein als Kunststoffschlauch ausgebildeter Hohlkörper 3 angeordnet ist. Das in der Zeichnung nicht sichtbare Ende des Hohlkörpers 3 ist verschlossen, wohingegen das dem verschlossenen Ende gegenüberliegende Ende des Hohlkörpers 3 mit einem Anschlusselement 5 versehen ist. Zur Bildung eines strukturverstärkten Rahmenbauteils wird der Hohlkörper 3 über das Anschlusselement 5 mit Druck beaufschlagt, wobei sich dieses ausdehnt und, wie in Fig. 2 dargestellt, an der Innenkontur 4 des Hohlprofils 2 zur Anlage kommt. In einem anschließenden Erwärmungsprozess, welcher durch eine separate Heizung oder durch eine nachfolgende, serienmäßige Oberflächenbehandlung, bspw. eine KTL-Beschichtung, erreicht werden kann, härtet der zuvor verformbare, aus Kunststoff gebildete Hohlkörper 3 aus, so dass ein ausgesteiftes Rahmenbauteil 1 gebildet ist.

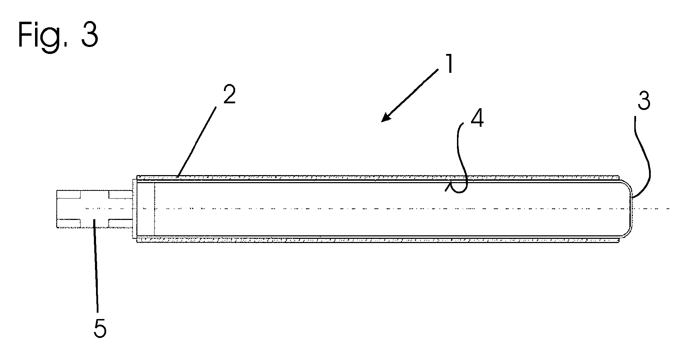

In Fig. 3 ist in einer Schnittansicht in Form einer Skizze die Anordnung des Hohlkörpers 3 an der Innenkontur 4 des Hohlprofils 2 erkennbar, wobei der Hohlkörper 3 einenends verschlossen ist und anderenends das Anschlusselement 5 zur Druckbeaufschlagung des Inneren des Hohlkörper 3 aufweist.

## Patentansprüche

1. Verfahren zur Herstellung eines zumindest abschnittsweise als Hohlprofil (2) ausgebildeten Rahmenbauteils (1) eines Kraftfahrzeugs, mit einer strukturellen Verstärkung aus faserverstärktem Kunststoff, umfassend folgende Schritte:
- Einbringen eines schlauchartigen Hohlkörpers (3) aus Kunststoff in das Hohlprofil (2),
- Druckbeaufschlagung des verformbaren Hohlkörpers (3) derart, dass dieser gegen eine Innenkontur (4) des Hohlprofils (2) gedrückt wird und
- Aushärtung des Hohlprofils (2).

2. Verfahren nach Anspruch 1, **dadurch gekennzeichnet, dass** der Hohlkörper (3) vor der Montage des aus zwei Schalenteilen gebildeten Hohlprofils (2) in ein Schalenteil eingelegt wird.

3. Verfahren nach Anspruch 1 oder 2, **dadurch gekennzeichnet, dass** der Hohlkörper (3) vor der Druckbeaufschlagung aufgeheizt wird und im abgekühlten Zustand ausgehärtet ist.

4. Verfahren nach einem der vorhergehenden Ansprüche, **dadurch gekennzeichnet, dass** der Hohlkörper (3), der derart ausgebildet ist, dass dieser unter Wärmezufuhr aushärtet, nach der Druckbeaufschlagung erwärmt wird.

5. Verfahren nach einem der vorhergehenden Ansprüche, **dadurch gekennzeichnet, dass** in den Bereich zwischen der Innenkontur (4) und dem Hohlkörper (3) ein Haftvermittler, insbesondere ein wärmeaktiver Strukturklebeschaum eingebracht wird.

6. Verfahren nach einem der vorhergehenden Ansprüche, **dadurch gekennzeichnet, dass** ein zuvor im Inneren des Hohlkörpers (3) angeordneter, wärmeaktivierbarer Hartschaum erwärmt wird.

7. Rahmenbauteil eines Kraftfahrzeugs, mit einem zumindest abschnittsweise als Hohlprofil ausgebildeten Bereich, **dadurch gekennzeichnet, dass** ein aus faserverstärktem Kunststoff gebildeter, schlauchartiger Hohlkörper (3) an eine Innenkontur (4) des Hohlprofils (2) angeformt ist.

8. Rahmenbauteil nach Anspruch 7, **dadurch gekennzeichnet, dass** der Hohlkörper (3) durch Druckbeaufschlagung an die Innenkontur (4) angeformt ist.

9. Rahmenbauteil nach Anspruch 7 oder 8, **dadurch gekennzeichnet, dass** der Hohlkörper (3) im ausgehärteten Zustand an der Innenkontur (4) anliegt.

10. Rahmenbauteil nach einem der Ansprüche 7 bis 9, **dadurch gekennzeichnet, dass** im Bereich zwischen der Innenkontur (4) und dem Hohlkörper (3) ein Haftvermittler, insbesondere ein wärmeaktiver Strukturklebeschaum angeordnet ist.

11. Rahmenbauteil nach einem der Ansprüche 7 bis 10, **dadurch gekennzeichnet, dass** im Inneren des Hohlkörpers (3) ein Hartschaum, insbesondere wärmeaktivierbarer Hartschaum angeordnet ist.

12. Rahmenbauteil nach einem der Ansprüche 7 bis 11, **dadurch gekennzeichnet, dass** der Hohlkörper (3) derart ausgebildet ist, dass er im Inneren, insbesondere im Crash-Fall, mit Druck beaufschlagt werden kann.

13. Rahmenbauteil nach einem der Ansprüche 7 bis 12, **dadurch gekennzeichnet, dass** der Hohlkörper (3) zum Anschluss an einen Gasgenerator ausgebildet ist.

14. Rahmenbauteil nach einem der Ansprüche 7 bis 13, **dadurch gekennzeichnet, dass** der Hohlkörper (3) aus einem faserverstärktem Thermo- oder Duroplast gebildet ist.
